(19) Europäisches Patentamt
European Patent Office
Office européen des brevets

(11) EP 0 486 110 B1

(12) EUROPEAN PATENT SPECIFICATION

(45) Date of publication and mention of the grant of the patent:
**29.01.1997 Bulletin 1997/05**

(51) Int Cl.6: **C08F 220/14**

(21) Application number: **91202962.6**

(22) Date of filing: **13.11.1991**

(54) **Interpolymer latices from esters of (meth)acrylic acid and vinyl esters of branched chain carboxylic acids**

Latice von Copolymeren von Estern von (Meth)Acrylsäure und Vinylestern von verzweigter Karboxylsäure

Latices de copolymères d'esters d'acide (meth)acrylique et d'esters vinyliques d'acides carboxyliques ramifiés

(84) Designated Contracting States:
**BE CH DE DK FR GB IT LI NL**

(30) Priority: **14.11.1990 GB 9024753**

(43) Date of publication of application:
**20.05.1992 Bulletin 1992/21**

(73) Proprietor: **SHELL INTERNATIONALE RESEARCH MAATSCHAPPIJ B.V.**
**2596 HR Den Haag (NL)**

(72) Inventors:
- **Scholten, Henricus Paulus Hubertus**
  **B-1348 Ottignies Louvain-la-Neuve (BE)**
- **Slinckx, Martine Madeleine Christiane Pierre**
  **B-1348 Ottignies Louvain-la-Neuve (BE)**

(56) References cited:
**EP-A- 0 071 070**
**EP-A- 0 431 656**
**GB-A- 967 479**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to interpolymers of esters of (meth)-acrylic acid and vinyl esters of branched chain carboxylic acids, to latices containing such interpolymers, to the preparation of such interpolymers, to coating compositions comprising such latices and to solid polymeric products, for example redispersible latex powders formed by drying of such latices.

GB-A-967,479 actually discloses a method for the preparation of a stable latex comprising copolymerizing a monomer mixture containing

(1) a vinyl ester of saturated aliphatic monocarboxylic acids in which the carboxyl groups are attached to tertiary and/or quaternary carbon atoms,
(2) an alkyl ester of a polymerizable alpha,beta-ethylenically unsaturated carboxylic acid, and
(3) from 0.5 to 5% by weight of total monomer of an alpha,beta-ethylenically unsaturated carboxylic acid, in an aqueous emulsion at a temperature between 0 °C and 90 °C and using a free radical initiator.

More particularly in the examples I-IX monomer premix compositions are used as starting materials which comprise as sole alkyl ester of alpha,beta-ethylenically unsaturated carboxylic acid component ethylacrylate or propylacrylate or methylmethacrylate, whereas as the vinyl ester of saturated branched aliphatic monocarboxylic acid component, inter alia mixtures of several carboxylic acids are applied, which contain from 7-19 carbon atoms.

Moreover in page 3 and in claim 8 of this publication as preferred combination of starting monomers has been mentioned, that of ethylacrylate and vinylpivalate with methacrylic acid in proportions from 60-82 parts of ethyl acrylate, from 17-39 parts vinylpivalate and from 1-3 parts of methacrylic acid respectively.

This process has been found to provide only insufficient polymerization yields, so that the latices obtained are still containing a substantial amount of residual monomers. The presence of free monomers in the latices is considered disadvantageous. These free monomers are substantially contributing to the odour of the latices and latex powders, cause a deleterious effect on latex stability and in the context of coating applications have shown a deleterious effect on the hardness, outdoor durability and blocking resistance of films formed by drying of the latices.

Further from the point of view of toxicity it is desirable to minimize free monomers.

Several efforts were made in the past to improve these polymerization yields as well as the properties of the finally formed film after drying the latices, e.g. included in coating compositions.

US-A-4,397,984 discloses an aqueous paper coating composition, which essentially comprises a finely divided pigment and an emulsion copolymer of

(a) from 30 to 80% by weight of alkylacrylates or mixtures of such compounds and di(alkyl)maleates, the alkyl group in which containing from 4 to 8 carbon atoms;
(b) from 8 to 30% by weight of acrylic acid and/or methacrylic acid;
(c) from 0 to 50% by weight of vinylpropionate, vinylacetate, methylacrylate, ethylacrylate and/or vinyl alpha-branched monocarboxylate, containing 10 carbon atoms in the carboxylic acid residue;
(d) from 0 to 5% by weight of acrylamide, methacrylamide, vinylsulphonic acid, 2-acrylamido-2-methylpropanesulphonic acid and/or acrylonitrile; and
(e) from 0 to 3% by weight of crosslinking monomers, in the form of an aqueous dispersion, as the sole binder or thickener.

Again an acceptable conversion degree close to the theoretically expected yield of the polymerization could not be obtained, which causes the hereinbefore mentioned unattractive coating film properties and toxicity.

However, it is still a generally existing conception for persons skilled in the art that alkylmethacrylates and/or alkylacrylates and vinyl esters with a large branched carbon chain are extremely difficult to copolymerize into a substantially random copolymer due to a large difference in reactivity of the respective monomers. Therefore the copolymerization of monomer pairs to a polymer latex dispersion at lower temperatures showing attractive properties of the coating films, has been regarded as rather difficult or even impossible as can be derived from VeoVa Technical Manual VM 2.1, pages 7 and 8, Technical Bulletin, issued June, 1988 (VeoVa is a trade mark).

Said conception also could be derived from the lectures held during FATIPIC Meeting Louvain-la-Neuve, Belgium, September 11, 1989 and during NVVT Meeting, Rotterdam, the Netherlands, May 23, 1989.

In addition, the theoretically expected yield cannot be reached because some of the monomer does not polymerize and give rise to the hereinbefore mentioned unattractive properties.

Due to a growing need of environmentally friendly aqueous coatings having more attractive properties, and/or obtained by a more reliable and efficient copolymerization, intensive further research effort was directed to the development of latices containing an interpolymer of vinyl acetate and vinyl esters of one or more tertiary carboxylic acid(s). Such interpolymers containing latices are known to show acceptable properties for use in coating applications. Known embodiments of such copolymer compositions are used as bases for matt and silk finish emulsion paints, latex powders, and in concrete mixes, as is known from EP-A-315,278 and US-A-3,654,209.

Due to modern coating industry requirements such interpolymer compositions appeared to have to be further improved in respect of mechanical properties, chemical resistance and water resistance of the finally obtained coating film after drying coating compositions, containing these interpolymers.

More particularly, it will be appreciated that there is a strong need to improve the properties of latices further in order to meet the requirements of glossy emulsion paints and anti-corrosion paints. Moreover there is a need for an efficient, and reliable process for the preparation of such latices, in order to enable the manufacture via an economically attractive way.

As result of extensive research and experimentation there were surprisingly found such interpolymer compositions aimed at, showing a very attractive combination of properties such as high monomer conversion and freeze thaw stability of the latex and chemical stability, alkali resistance, light resistance and flexibility and more particularly ultra-violet resistance, and water resistance of latex film.

Accordingly a group of interpolymers is provided characterized in that they have been derived from a starting comonomer mixture comprising

(a) methylmethacrylate;
(b) butylacrylate;
(c) the vinyl ester of one or more saturated monocarboxylic acids in which the carboxyl groups are attached to tertiary and/or quaternary carbon atoms and in which the acid moiety contains 10 carbon atoms and preferably the vinyl ester of Versatic 10 acid (VeoVa 10) (Versatic and VeoVa being trademarks);
(d) a stabilizing monomer, selected from the group of acrylic acid, methacrylic acid, acrylamide, methacrylamide, diacetone acrylamide and sodium vinylsulphonate and mixtures thereof, of which acrylic acid or acrylamide are the most preferred, in an amount of from 0.5 to 5% by weight, relative to the total weight of monomers,

wherein the respective weight percentages of the components (a), (b) and (c), being calculated relative to the total weight of the sum of the amounts of these components, are simultaneously fulfilling the following equations, each describing compositions having equal performance contour lines in a triangle diagram:

$$\text{CONV.} = 100\,X_1 + 100\,X_2 + 99.2\,X_3 - 0.4\,X_1X_3 - 3.6\,X_2X_3 + 3.0\,X_1X_2X_3 \quad \text{(I)}$$

$$T_g = 112\,X_1 - 44\,X_2 - 88\,X_1X_2 - 44\,X_1X_3 - 20\,X_2X_3 + 87\,X_1X_2X_3 \quad \text{(II)}$$

$$\text{WA} = 2\,X_1 + 62\,X_2 + 19.4\,X_3 + 56.8\,X_1X_2 - 6.8\,X_1X_3 + 17.2\,X_2X_3 + 92.7\,X_1X_2X_3 \quad \text{(III)}$$

$$\text{WS} = 10\,X_1 + 5\,X_3 - 4\,X_1X_2 + 10\,X_1X_3 - 10\,X_2X_3 + 12\,X_1X_2X_3 \quad \text{(IV)}$$

wherein the CONV represents the monomer conversion in % m/m and has a value of at least 99% wherein a premix has been prepared by mixing 575 pbw of demineralized water, 5 pbw of a 10% alkaryl sulphonate anionic surfactant, 120 pbw of a 25% non-ionic surfactant, 4 pbw potassium persulphate, 390 pbw of a (a), 100pbw of (b), 500 pbw of (c) and 10 pbw of (d), and the premix has been added over a period of 3 hours under nitrogen at 80 °C to 480 pbw of demineralized water, 95 pbw of the 10% alkaryl sulphonate anionic surfactant in water and 1 pbw of potassium persulphate, followed by adding the emulsion premix regularly over a period of 3 hours to a reactor that has been preheated to a temperature of 80 °C and that has been filled with the rest of the demineralized water and the remaining amounts of the anionic surfactant of the non-ionic surfactant and of the free radical forming initiator, followed by a 2 hour post reaction at 80 °C; wherein $T_g$ represents the glass transition temperature having a value in the range of from 0 to 50 °C; wherein WA represents the water absorption value being at most 35% m/m measured as specified hereinafter; wherein WS represents the water spot rating after 24 hours as specified hereinafter, being at least 6; wherein $X_1$

represents the weight percentage of component (a); $X_2$ represents the weight percentage of component (b); and wherein $X_3$ represents the weight percentage of component (c), the values of $X_1$, $X_2$ and $X_3$ being calculated relative to the total weight of the components (a), (b) and (c) and each being in the range of from 0.5 to 99.0%. It is observed that the exact values of the coefficients in the above equations are slightly depending on the specific types of the applied stabilizing monomer and surfactant, and also on the concentrations thereof.

Earlier EP-A-431,656 that forms part of the state of the art pursuant to Art. 54(3) and (4) EPC for the contracting states, BE, CH, DE, FR, GB, IT, LI and NL, discloses interpolymers similar to the ones according to the present invention, however, prepared from a monomer mixture comprising apart from the above components (a), (b) and (d), a mixture of a vinylester of a tertiary carboxylic acid in which the acid moiety contains 9 carbon atoms and of at most 30% by weight, based on the total amount of vinylesters of a tertiary carboxylic acid, of a vinylester of a tertiary aliphatic carboxylic acid in which the acid moiety contains 10 carbon atoms.

According to a preferred embodiment of the present invention, interpolymers are provided, which are derivable from the components (a)-(d), wherein the component (c) is the vinyl ester of Versatic 10 acid (VeoVa 10) and wherein the component (d) is acrylic acid, used in an amount of from 0.5 to 2% by weight and preferably 1% by weight.

It will be appreciated by a person skilled in the art that starting monomer compositions containing monomers (a), (b) and (c) in proportions meeting the aforementioned equations (I) to (IV) are represented by the shaded area in figure 1, in the event that 1% by weight of acrylic acid is used as stabilizing monomer.

More preferably those interpolymers are derivable from comonomer mixtures, wherein the weight fraction of the components (a), (b) and (c) simultaneously fulfill the equations (I) to (IV), however wherein CONV has a value of at least 99.2%; wherein $T_g$ has a value in the range from 10 to 50 °C; wherein WA has a value of at most 25%; and wherein WS (24 hours) has a rating of at least 7.

It will be appreciated that these preferred starting comonomer compositions, containing monomers (a), (b) and (c) in the suitable proportions meeting the aforementioned more stringent equations are represented by the shaded area in figure 2.

The most preferred embodiments of the interpolymers of the present invention are formed by those, characterized in that they are derivable from a starting comonomer mixture comprising:

(a) from 15 to 65% by weight of methylmethacrylate;
(b) from 0.5 to 20% by weight of butylacrylate;
(c) from 20 to 85% by weight of VeoVa 10 (trade mark);
(d) from 0.5 to 3% by weight of acrylic acid or acrylamide.

It has moreover been found, that by the use of only one copolymerizable stabilizing component (d), latices could be obtained showing an acceptable low free monomer content of ≤ 2% by weight, based on the solid content, and a good stability.

It will be appreciated that the present invention is also relating to latices, containing as polymeric constituent 30-60% by weight of an interpolymer as described hereinbefore and more preferably those wherein the polymeric constituent amounts from 40-50% by weight, to coating compositions comprising a latex and preferably at least one pigment, and to solid interpolymeric products formed by physical drying of such latices or coatings and to redispersible latex powders formed by physical drying of such latices and to coating compositions derived from such powders.

A further aspect of the present invention relates to a process for the preparation of latices containing the hereinbefore specified interpolymers.

It was found in addition that these attractive results could be reached by effecting thermal initiation of the starting reaction mixture, being rather independent on the actual relative proportions of the components (a)-(d) in the indicated ranges. More preferably thermal initiation of the reaction mixture is applied.

The interpolymers containing latices according to the present invention may be prepared by polymerization of the comonomer mixture under conditions which are known in the art and generally involve a temperature of 20-100 °C. More particularly the preparation process is carried out in a temperature range of from 60-100 °C, and preferably 75-85 °C.

In the reaction mixture additional stabilizers, optionally to be copolymerized, one or more polymerization initiators and optionally buffering agents are to be included, but more preferably not any buffering agent is used.

Stabilizers suitably constitute about 1-4% by weight of the latex in total. It is preferred that the stabilizers used in the latex comprise at least one anionic surface active agent, which is believed to have a beneficial effect on the stability of the latex and in particular on the reaction mixture during the polymerization process, facilitating the formation of micelles in which the interpolymer is formed, and optionally a non-ionic surface active agent, which is believed to contribute to latex stability; or at least one surface active agent of the mixed anionic/non-ionic type.

Suitable anionic surface active agents include alkylarylsulphonates, for example alkylbenzene sulphonates; salts of sulphosuccinic esters; alkylsulphates, alkylsulphonates, alkylarylphosphates, sulphates of hydroxyethyl esters of

monocarboxylic acids, sulphates of alkylphenoxypolyethoxyethanols, sulphates and sulphonates of hydroxypropyl esters of monocarboxylic acids and sulphates of monoglycerides of monocarboxylic acids, such compounds having 12-24 carbon atoms; and salts of $C_{9-19}$ monocarboxylic acids. Suitably 0.05-1% by weight of the latex may be constituted by anionic surface active agents, preferably 0.1-0.5%.

Suitable non-ionic surface active agents include reaction products of hydroxy compounds with alkylene oxides, such as ethylene oxide or propylene oxide, for example a compound of the general formula $R-C_6H_4-O-(CH_2-CH_2-O)_n-H$ where R represents a $C_{6-16}$, especially $C_{8-9}$, alkyl group and n represents a number from 3 to 40; reaction products of ethylene oxide with propylene glycol ethers, or with alcohols, suitably of 6-20 carbon atoms, for example octyl, lauryl or cetyl alcohol. Suitably 0.5-2% of the weight of the latex may be constituted by non-ionic surface active agents.

Suitable surface active agents of the mixed anionic/non-ionic type include sulphonates based on alkylarylpolyglycol ethers.

Preferably both an anionic and a non-ionic surface active agent are used. Especially preferred is the use of an alkylarylsulphonate together with a compound $R-C_6H_4-O-(CH_2-CH_2-O)_n-H$, for example nonylphenylethoxylate.

Suitable initiators are compounds which form free radicals under the reaction conditions for the aqueous emulsion polymerization, whether by thermal breakdown, redox reaction or photo initiation. Initiators include organic, water-soluble peroxides, hydroperoxides and persulphates. Examples are hydrogen peroxide and sodium, ammonium or, especially, potassium persulphate. 0.1-1%, preferably 0.4-0.7% of initiator, based on weight of the reaction mixture, is suitably employed.

Buffering agents, if any needed, suitable for use in the polymerization process are water-soluble compounds which can prevent the pH of the mixture falling below about 4. Preferred buffering agents include borax and an organic acid, suitable acetic acid, or an alkali metal carbonate or bicarbonate, or acetate.

According to a preferred embodiment of the process of the present invention, thermal initiation is applied and the reaction is carried out in an inert atmosphere, nitrogen suitably being used to flush out the reaction vessel prior to the start of the reaction.

According to a further preferred embodiment of the process of the present invention, an emulsion premix is prepared in demineralized water from a part of one or more surface active agents, and a part of one or more redox initiators and comonomers (a), (b), (c) and (d). The reactor is flushed with nitrogen and filled with about an equal amount of demineralized water, and the remaining amounts of the surface active agent(s) and initiator.

The reactor is heated to a temperature in the specified range, preferably 80 °C, the nitrogen stream is stopped and the emulsion premix addition is started. The addition is normally extended over a period of from 2 to 5 hours during which the originally adjusted temperature is maintained. A post polymerization period after termination of the addition of premix of from 1 to 3 hours is normally used at a temperature of 80 °C.

After this post polymerization, the latex obtained is cooled and if necessary filtered.

The generally obtained latices have a total solids content in the range of from 30-60% by weight of the latex and preferably from 40-50% and a weight average particle diameter in the range of from 90-170 nm depending on the surfactant repartition between the emulsion premix and the initial reactor charge.

A further aspect of the present invention relates to a latex produced by the process described above, and the interpolymer which forms on physical drying of such a latex, for example to form a coating on a substrate or a powder intended for reconstitution as a latex or use in a concrete or other latex based end product.

Latices in accordance with the invention may find application in concretes, lacquers, paints, wood coatings, anti-corrosive paints and textured coatings. They are of particular interest for composing lacquers and paints due to their good film forming properties, their water resistance, their high pigment binding power, flexibility, the lack of tackiness of the films, their
alkali resistance and resistance to ultra violet light. Paints containing the latices of the invention contain pigments, and will commonly contain further constituents, examples being fillers, cosolvents, thickeners, dispersants, preservatives, corrosion inhibitors, and anti foaming agents.

It will be appreciated therefore that coating compositions, comprising the latices according to the present invention and solid interpolymer product formed thereof, also form an aspect of the present invention.

The invention will now be further described with reference to the following examples.

EXAMPLE I

In a three litre reaction flask, provided with a central and four peripheral glass openings fitted with a reflux condenser, stirrer, thermometer, nitrogen inlet tube and emulsion premix inlet tube.

An emulsion premix is prepared by mixing the following ingredients in the given amounts.

| | |
|---|---|
| Demineralized water | 575.0 g |

(continued)

| | |
|---|---|
| Humifen SF 90 (10% in water)+ | 5.0 |
| Arkopal N230 (25% in water)++ | 120.0 |
| Potassium persulphate | 4.0 |
| Methyl methacrylate | 390.0 |
| butylacrylate | 100.0 |
| VeoVa 10+++ | 500.0 |
| Acrylic acid | 10.0 |

+ "Humifen SF 90" is a registered trade mark for an alkaryl sulphonate anionic surfactant

++ "Arkopal N230" is a registered trade mark for a non-ionic surfactant

+++ "VeoVa 10" is a trade mark for vinyl esters of tertiary carboxylic acid containing 10 carbon atoms

The reaction flask is swept with nitrogen and the following ingredients are added:

| | |
|---|---|
| Demineralized water | 480.0 g |
| Humifen SF 90 (10% in water) | 95.0 |
| Potassium persulphate | 1.0 |

The ingredients in the reaction flask are heated to 80 °C. When the temperature reaches 80 °C, the nitrogen stream is stopped and the emulsion premix addition is started. The monomer pre-emulsion is added regularly over a period of 3 hours and a temperature of 80 °C is maintained. A 2-hour digestion period (at the same temperature) is applied. After the post-cooking, the latex is cooled and if necessary filtered. In general, these latices have a total solids content of 45% and the weight average particle diameter is about 150 nm.

The obtained latices were tested as to water absorption, water spot resistance of latex polymer film, whereas also monomer conversion, viscosity, minimum film formation, temperature, glass transition temperature, tensile strength and yield value, and surface hardness, were measured.

Examples II-V, and comparative examples C and D

In the same way as described in Example I, interpolymer latices were prepared from different sets of comonomers.

The respective amounts of the applied constituting monomers in per cent by weight relative to the total starting composition and the relevant properties of the latices obtained are listed in the following table.

With respect to the comparative examples it is observed that all are lacking in water spot resistance, and moreover "A" contains too much residual monomer; "B" is too viscous; "C" absorbs too much water; and "D" has a too high Tg.

TABLE

| Latex Reference | I | II | III | IV | V | A* | B** | C | D |
|---|---|---|---|---|---|---|---|---|---|
| **Monomer composition in weight %:** | | | | | | | | | |
| Methylmethacrylate | 39.0 | 43.0 | 49.0 | 48.5 | 39.0 | | | 33.0 | 49.5 |
| Butylacrylate | 10.0 | 10.0 | 5.0 | 5.0 | 10.0 | | | 33.0 | |
| VeoVa 10 | 50.0 | 45.0 | 45.0 | 45.0 | 50.0 | 37.5 | | 33.0 | |
| VeoVa 9 (trademark) | | | | | | | | | 49.5 |
| Ethylacrylate | | | | | | 61.2 | | | |
| Acrylic acid | 1.0 | | | | | | | 1.0 | 1.0 |
| Methacrylic acid | | 2.0 | | | | 1.3 | | | |
| Acrylamide | | | 1.0 | | | | | | |
| Sodium vinylsulfonate | | | | 1.5 | | | | | |
| Diacetone acrylamide | | | | | 1.0 | | | | |
| **Latex properties:** | | | | | | | | | |
| Conversion (% on monomer intake) | 99.5 | 99.3 | 99.4 | 99.3 | 99.2 | 91.0 | | 99.4 | 99.0 |
| Solid content in % | 45.1 | 45.6 | 44.2 | 45.3 | 44.5 | 43.5 | 49.1 | 45.8 | 44.7 |
| MFT (deg. C) | 21 | 40 | 41 | 46 | 21 | <0 | 17 | 1 | 63 |
| Particle size (nm) | 130 | 129 | 132 | 132 | 129 | 136 | 167 | 140 | 140 |
| Viscosity (mPa.s) | 50 | 50 | 40 | 30 | 50 | 200 | 4500 | 70 | 30 |
| **Polymer properties:** | | | | | | | | | |
| Tg (deg. C) | 28 | 34 | 33 | 42 | 22 | -13 | 21 | 9 | 54 |
| Water spot resistance (24 hours exposure) | 7 | 7 | 10 | 10 | 7 | 1 | 6 | 5 | 6 |
| Water absorption in % (thick film - 14 days) | 12.6 | 9.5 | 10.7 | 6.3 | 11.9 | | 24.0 | 38.7 | 8 |

```
*  Comp A = composition according to GB-A-967,479
** Comp B = Acronal 290 D (trade mark), a commercially available
generally used coating composition.
```

The water absorption of latex polymer films (Thick film test method) was measured as described hereinafter.

A wet film of 2 mm thickness is applied on a polyethylene foil (the latex is kept on the foil by applying an automotive sealer on the edges of the foil). To avoid a too fast evaporation of water and as a result severe mud-cracking the panels are covered with some water vapour transmitting material and then stored at 20 °C above the $T_g$ for a week. The cover is removed after clear films are formed. Three pieces of 2 x 2 cm are cut from the film after removal from the glass panel and weighed to the nearest 0.1 mg. These are stored in demineralized water at 23 °C and reweighed after 1, 2, 4, 7 and eventually 14 days (after removal of the excess of water by filter paper). The water absorption is calculated from the observed weight increase. The result of the triplicate measurements are averaged and usually the relation between immersion time and water absorption is graphically plotted. In case the water absorption of emulsion paints is of interest, it is suggested to prepare a paint film with 40% PVC pigmentation.

The water spot resistance of latex polymer films was measured as described hereinafter.

A wet latex film of 200 µm (micron) is applied on a glass panel and allowed to dry for a week at 20 °C above the $T_g$. When cooled to 23 °C a drop of water is brought on the film and the panel is placed on a dark underground. After 5, 10, 15 and 60 minutes and 24 hrs the whitening effect is visually judged. A rating between 10 (film is unaffected) and 0 (film is completely white) is given every time. After one hour the four scores are added and divided by four (max. score 40). If the film scores very high it is worthwhile to continue the test for another 23 hours and to give a 24 hours rating between 0 and 10. In order to avoid evaporation of the water droplet, it can be covered overnight by a watch glass.

## Claims

### Claims for the following Contracting States : BE, CH, DE, FR, GB, IT, LI, NL

**1.** Interpolymers obtainable by polymerization of a comonomer mixture comprising

(a) methylmethacrylate;
(b) butylacrylate;
(c) the vinyl ester of one or more saturated monocarboxylic acids in which the carboxyl groups are attached to tertiary and/or quaternary carbon atoms and in which the acid moiety contains 10 carbon atoms;
(d) a stabilizing monomer, selected from the group of acrylic acid, methacrylic acid, acrylamide, methacrylamide, diacetone acrylamide and sodium vinylsulphonate and mixtures thereof, in an amount of from 0.5 to 5% by weight,

relative to the total weight of monomers, wherein the respective weight percentages of the components (a), (b) and (c), being calculated relative to the total weight of the sum of the amounts of these components, are simultaneously fulfilling the following equations, each describing compositions having equal performance contour lines in a triangle diagram:

$$\text{CONV.} = 100\,X_1 + 100\,X_2 + 99.2\,X_3 - 0.4\,X_1X_3 - 3.6\,X_2X_3 + 3.0\,X_1X_2X_3 \qquad (I)$$

$$T_g = 112\,X_1 - 44\,X_2 - 88\,X_1X_2 - 44\,X_1X_3 - 20\,X_2X_3 + 87\,X_1X_2X_3 \qquad (II)$$

$$WA = 2\,X_1 + 62\,X_2 + 19.4\,X_3 + 56.8\,X_1X_2 - 6.8\,X_1X_3 + 17.2\,X_2X_3 + 92.7\,X_1X_2X_3 \qquad (III)$$

$$WS = 10\,X_1 + 5\,X_3 - 4\,X_1X_2 + 10\,X_1X_3 - 10\,X_2X_3 + 12\,X_1X_2X_3 \qquad (IV)$$

wherein the CONV represents the monomer conversion in % m/m and has a value of at least 99% wherein a premix has been prepared by mixing 575 pbw of demineralized water, 5 pbw of a 10% alkaryl sulphonate anionic surfactant, 120 pbw of a 25% non-ionic surfactant, 4 pbw potassium persulphate, 390 pbw of (a), 100 pbw of (b), 500 pbw of (c) and 10 pbw of (d), and the premix has been added over a period of 3 hours under nitrogen at 80 °C to 480 pbw of demineralized water, 95 pbw of the 10% alkaryl sulphonate anionic surfactant in water and 1 pbw of potassium persulphate, followed by adding the emulsion premix regularly over a period of 3 hours to a reactor that has been preheated to a temperature of 80 °C and that has been filled with the rest of the demineralized water and the remaining amounts of the anionic surfactant, of the non-ionic surfactant and of the free radical forming initiator, followed by 2 hour post reaction at 80 °C; wherein $T_g$ represents the glass transition temperature having a value in the range of from 0 to 50 ° C; wherein WA represents the water absorption value being at most 35% m/m; wherein WS represents the water spot rating after 24 hours, being at least 6; wherein $X_1$ represents the weight percentage of component (a); $X_2$ represents the weight percentage of component (b); and wherein $X_3$ represents the weight percentage of component (c), the values of $X_1$, $X_2$ and $X_3$ being calculated relative to the total weight of the components (a), (b) and (c) and each being in the range of from 0.5 to 99.0% by weight with the proviso that when the comonomer mixture comprising a mixture of a vinylester of a tertiary carboxylic acid in which the acid moiety contains 9 carbon atoms and of a vinylester of a tertiary aliphatic carboxylic acid in which the acid moiety contains 10 carbon atoms, the amount of the vinylester of a tertiary aliphatic carboxylic acid in which the acid moiety contains 10 carbon atoms is more than 30% by weight, based on the total amount of vinylesters of a tertiary carboxylic acid.

**2.** Interpolymers according to claim 1, characterized in that component (d) is selected from acrylic acid and acrylamide.

**3.** Interpolymers according to claim 1, characterized in that the weight fractions of the components (a), (b) and (c) simultaneously fulfil the equations (I) to (IV), wherein CONV has a value of at least 99.2%; wherein $T_g$ has a value in the range from 10 to 50 °C; wherein WA has a value of at most 25%; and wherein WS (24 hours) has a rating of at least 7.

**4.** Interpolymers according to claims 1 to 3, characterized in that they are derivable from a starting mixture comprising:

(a) from 15 to 65% by weight of methylmethacrylate;(b) from 0.5 to 20% by weight of butylacrylate;
(c) from 20 to 85% by weight of vinylesters of tertiary carboxylic acid containing 10 carbon atoms;
(d) from 0.5 to 3% by weight of acrylic acid or acrylamide.

**5.** A latex containing as polymeric constituent 30-60% by weight of an interpolymer according to anyone of claims 1 to 4.

**6.** A latex according to claim 5, characterized in that the polymeric constituent amounts from 40-50% by weight.

**7.** Coating compositions comprising a latex according to any one of the claims 5 and 6 and at least one pigment.

**8.** A solid interpolymeric product formed by physical drying of a latex according to claims 5 and 6.

**9.** A process for the preparation of latices, containing the interpolymers according to anyone of claims 1 to 4, by polymerization of the comonomer mixtures at a temperature in the range of from 20 to 100 °C in the presence of one or more polymerization initiators, and as stabilizer an anionic surface active agent comprising an alkylarylsulphonate together with a non-ionic surface active agent comprising a compound $R-C_6H_4-O--(-CH_2-CH_2-O)_n-H$ where R represents C6-16 alkyl and n represents a number from 3 to 40, in an amount of from 1 to 4% by weight.

**Claims for the following Contracting State : DK**

**1.** Interpolymers obtainable by polymerization of a comonomer mixture comprising

(a) methylmethacrylate;
(b) butylacrylate;
(c) the vinyl ester of one or more saturated monocarboxylic acids in which the carboxyl groups are attached to tertiary and/or quaternary carbon atoms and in which the acid moiety contains 10 carbon atoms;
(d) a stabilizing monomer, selected from the group of acrylic acid, methacrylic acid, acrylamide, methacrylamide, diacetone acrylamide and sodium vinylsulphonate and mixtures thereof, in an amount of from 0.5 to 5% by weight,

relative to the total weight of monomers, wherein the respective weight percentages of the components (a), (b) and (c), being calculated relative to the total weight of the sum of the amounts of these components, are simultaneously fulfilling the following equations, each describing compositions having equal performance contour lines in a triangle diagram:

$$\text{CONV.} = 100\ X_1 + 100\ X_2 + 99.2\ X_3 - 0.4\ X_1X_3 - 3.6\ X_2X_3 + 3.0\ X_1X_2X_3 \quad \text{(I)}$$

$$T_g = 112\ X_1 - 44\ X_2 - 88\ X_1X_2 - 44\ X_1X_3 - 20\ X_2X_3 + 87\ X_1X_2X_3 \quad \text{(II)}$$

$$\text{WA} = 2\ X_1 + 62\ X_2 + 19.4\ X_3 + 56.8\ X_1X_2 - 6.8\ X_1X_3 + 17.2\ X_2X_3 + 92.7\ X_1X_2X_3 \quad \text{(III)}$$

$$\text{WS} = 10\ X_1 + 5\ X_3 - 4\ X_1X_2 + 10\ X_1X_3 - 10\ X_2X_3 + 12\ X_1X_2X_3 \quad \text{(IV)}$$

wherein the CONV represents the monomer conversion in % m/m and has a value of at least 99% wherein a premix has been prepared by mixing 575 pbw of demineralized water, 5 pbw of a 10% alkaryl sulphonate anionic surfactant, 120 pbw of a 25% non-ionic surfactant, 4 pbw potassium persulphate, 390 pbw of (a), 100 pbw of (b), 500 pbw of (c) and 10 pbw of (d), and the premix has been added over a period of 3 hours under nitrogen at 80 °C to 480 pbw of demineralized water, 95 pbw of the 10% alkaryl sulphonate anionic surfactant in water and 1 pbw of potassium persulphate, followed by adding emulsion premix regularly over a period of 3 hours to a reactor that has been preheated to a temperature of 80 °C and that has been filled with the rest of the demineralized water and the remaining amounts of the anionic surfactant of the non-ionic surfactant and of the free radical forming initiator followed by 2 hour post reaction at 80 °C; wherein $T_g$ represents the glass transition temperature having a value in the range of from 0 to 50 °C; wherein WA represents the water absorption value being at most 35% m/m; wherein WS represents the water spot rating after 24 hours, being at least 6; wherein $X_1$ represents the weight percentage of component (a); $X_2$ represents the weight percentage of component (b); and wherein $X_3$ represents the weight percentage of component (c), the values of $X_1$, $X_2$ and $X_3$ being calculated relative to the total weight of the components (a), (b) and (c) and each being in the range of from 0.5 to 99.0% by weight.

**2.** Interpolymers according to claim 1, characterized in that component (d) is selected from acrylic acid and acrylamide.

**3.** Interpolymers according to claim 1, characterized in that the weight fractions of the components (a), (b) and (c) simultaneously fulfil the equations (I) to (IV), wherein CONV has a value of at least 99.2%; wherein $T_g$ has a value in the range from 10 to 50 °C; wherein WA has a value of at most 25%; and wherein WS (24 hours) has a rating of at least 7.

**4.** Interpolymers according to claims 1 to 3, characterized in that they are derivable from a starting mixture comprising:

(a) from 15 to 65% by weight of methylmethacrylate;
(b) from 0.5 to 20% by weight of butylacrylate;
(c) from 20 to 85% by weight of vinylesters of tertiary carboxylic acid containing 10 carbon atoms;
(d) from 0.5 to 3% by weight of acrylic acid or acrylamide.

**5.** A latex containing as polymeric constituent 30-60% by weight of an interpolymer according to anyone of claims 1 to 4.

**6.** A latex according to claim 5, characterized in that the polymeric constituent amounts from 40-50% by weight.

**7.** Coating compositions comprising a latex according to any one of the claims 5 and 6 and at least one pigment.

**8.** A solid interpolymeric product formed by physical drying of a latex according to claims 5 and 6.

**9.** A process for the preparation of latices, containing the interpolymers according to anyone of claims 1 to 4, by polymerization of the comonomer mixtures at a temperature in the range of from 20 to 100 °C in the presence of one or more polymerization initiators, and as stabilizer an anionic surface active agent comprising an alkylarylsulphonate together with a non-ionic surface active agent comprising a compound

$$R-C_6H_4-O-(CH_2-CH_2-O)_n-H,$$

where R represents C6-16 alkyl and n represents a number from 3 to 40, in an amount of from 1 to 4% by weight.

## Patentansprüche

### Patentansprüche für folgende Vertragsstaaten : BE, CH, DE, FR, GB, IT, LI, NL

**1.** Mischpolymerisate, erhältlich durch Polymerisation einer Comonomermischung aus

(a) Methacrylsäuremethylester;
(b) Acrylsäurebutylester;
(c) dem Vinylester einer oder mehrerer gesättigter Monocarbonsäuren, in denen die Carboxylgruppen an tertiäre und/oder quaternäre Kohlenstoffatome gebunden sind und der Säurerest 10 Kohlenstoffatome enthält;
(d) einem stabilisierend wirkenden Monomer, ausgewählt aus der Gruppe Acrylsäure, Methacrylsäure, Acrylamid, Methacrylamid, Diacetonacrylamid und Natriumvinylsulfonat sowie deren Mischungen in einer Menge von 0,5 bis 5 Gew.-%, bezogen auf das Gesamtgewicht der Monomere,

wobei die jeweiligen Gewichtsprozentsätze der Komponenten (a), (b) und (c), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

$$\text{UMS.} = 100\,X_1 + 100\,X_2 + 99{,}2\,X_3 - 0{,}4\,X_1X_3 - 3{,}6\,X_2X_3 + 3{,}0\,X_1X_2X_3 \quad \text{(I)}$$

$$T_g = 112\,X_1 - 44\,X_2 - 88\,X_1X_2 - 44\,X_1X_3 - 20\,X_2X_3 + 87\,X_1X_2X_3 \quad \text{(II)}$$

$$WA = 2\,X_1 + 62\,X_2 + 19{,}4\,X_3 + 56{,}8\,X_1X_2 - 6{,}8\,X_1X_3 + 17{,}2\,X_2X_3 + 92{,}7\,X_1X_2X_3 \quad \text{(III)}$$

$$WS = 10\,X_1 + 5\,X_3 - 4\,X_1X_2 + 10\,X_1X_3 - 10\,X_2X_3 + 12\,X_1X_2X_3 \quad \text{(IV)}$$

wobei UMS den Monomerumsatz in Masse-% bedeutet und einen Wert von mindestens 99% hat, wobei ein durch Vermischen von 575 Gew.-Teilen entmineralisiertem Wasser, 5 Gew.-Teilen eines 10%igen Alkarylsulfonats als anionischem Tensid, 120 Gew.-Teilen eines 25%igen nichtionischen Tensids, 4 Gew.-Teilen Kaliumpersulfat, 390 Gew.-Teilen (a), 100 Gew.-Teilen (b), 500 Gew.-Teilen (c) und 10 Gew.-Teilen (d) hergestellter Premix unter Stickstoff über einen Zeitraum von 3 Stunden bei 80°C zu 480 Gew.-Teilen entmineralisiertem Wasser, 95 Gew.-Teilen des 10%igen Alkarylsulfonats als anionischem Tensid in Wasser und 1 Gew.-Teil Kaliumpersulfat gegeben wurde

und der Emulsionspremix über einen Zeitraum von 3 Stunden in einen auf 80°C vorgewärmten, mit dem restlichen entmineralisierten Wasser und den Restmengen des anionischen Tensids, des nichtionischen Tensids und des radikalbildenden Initiators befüllten Reaktor eindosiert und noch zwei Stunden bei 80°C nachreagieren gelassen wurde; $T_g$ die Glasübergangstemperatur mit einem Wert im Bereich von 0 bis 50°C; WA den Wasseraufnahmewert von höchstens 35 Masse-%; WS den Wasserfleckwert nach 24 Stunden, der mindestens 6 beträgt; $X_1$ den Gewichtsanteil der Komponente (a); $X_2$ den Gewichtsanteil der Komponente (b) und $X_3$ den Gewichtsanteil der Komponente (c) bedeuten, wobei die jeweiligen Werte von $X_1$, $X_2$ und $X_3$ im Bereich von 0,5 bis 99,0 Gew.-%, bezogen auf das Gesamtgewicht der Komponenten (a), (b) und (c), liegen, mit der Maßgabe, daß bei einer Comonomermischung, die eine Mischung aus einem Vinylester einer tertiären Carbonsäure, in der der Säurerest 9 Kohlenstoffatome enthält, und einem Vinylester einer tertiären aliphatischen Carbonsäure, in der der Säurerest 10 Kohlenstoffatome enthält, die Menge des Vinylesters einer tertiären aliphatischen Carbonsäure, in der der Säurerest 10 Kohlenstoffatome enthält, über 30 Gew.-%, bezogen auf die Gesamtmenge an Vinylestern einer tertiären Carbonsäure, liegt.

**2.** Mischpolymerisate nach Anspruch 1, dadurch gekennzeichnet, daß die Komponente (d) aus Acrylsäure und Acrylamid ausgewählt ist.

**3.** Mischpolymerisate nach Anspruch 1, dadurch gekennzeichnet, daß die Gewichtsanteile der Komponenten (a), (b) und (c) gleichzeitig Gleichungen (I) bis (IV) erfüllen, wobei UMS einen Wert von mindestens 99,2%; $T_g$ einen Wert im Bereich von 10 bis 50°C; WA einen Wert von höchstens 25% und WS (24 Stunden) einen Wert von mindestens 7 hat.

**4.** Mischpolymerisate nach den Ansprüchen 1 bis 3, dadurch gekennzeichnet, daß sie sich aus einer Ausgangsmischung aus:

(a) 15 bis 65 Gew.-% Methacrylsäuremethylester;
(b) 0,5 bis 20 Gew.-% Acrylsäurebutylester;
(c) 20 bis 85% Gew.-% Vinylestern einer tertiären Carbonsäure mit 10 Kohlenstoffatomen;
(d) 0,5 bis 3 Gew.-% Acrylsäure oder Acrylamid ableiten lassen.

**5.** Latex, das als polymeren Bestandteil 30-60 Gew.-% eines Mischpolymerisats nach einem der Ansprüche 1 bis 4 enthält.

**6.** Latex nach Anspruch 5, dadurch gekennzeichnet, daß der polymere Bestandteil 40-50 Gew.-% ausmacht.

**7.** Beschichtungszusammensetzungen, enthaltend einen Latex nach einem der Ansprüche 5 und 6 und mindestens ein Pigment.

**8.** Festes, mischpolymerisiertes Produkt, gebildet durch physikalisches Trocknen eines Latex nach den Ansprüchen 5 und 6.

**9.** Verfahren zur Herstellung von Latices, die die Mischpolymerisate nach einem der Ansprüche 1 bis 4 enthalten, durch Polymerisation der Comonomermischungen bei einer Temperatur im Bereich von 20 bis 100°C in Gegenwart eines oder mehrerer Polymerisationsinitiatoren und eines anionischen oberflächenaktiven Mittels, das ein Alkylarylsulfonat enthält, zusammen mit einem nichtionischen oberflächenaktiven Mittel, die eine Verbindung $R-C_6H_4-O-(-CH_2-CH_2-O)_n-H$, wobei R eine $C_{6-16}$-Alkylgruppe und n eine Zahl zwischen 3 und 40 darstellen, enthält, in einer Menge von 1 bis 4 Gew.-% als Stabilisierungsmittel.

**Patentansprüche für folgenden Vertragsstaat : DK**

**1.** Mischpolymerisate, erhältlich durch Polymerisation einer Comonomermischung aus

(a) Methacrylsäuremethylester;
(b) Acrylsäurebutylester;
(c) dem Vinylester einer oder mehrerer gesättigter Monocarbonsäuren, in denen die Carboxylgruppen an tertiäre und/oder quaternäre Kohlenstoffatome gebunden sind und der Säurerest 10 Kohlenstoffatome enthält;
(d) einem stabilisierend wirkenden Monomer, ausgewählt aus der Gruppe Acrylsäure, Methacrylsäure, Acrylamid, Methacrylamid, Diacetonacrylamid und Natriumvinylsulfonat sowie deren Mischungen in einer Menge von 0,5 bis 5 Gew.-%, bezogen auf das Gesamtgewicht der Monomere,

wobei die jeweiligen Gewichtsprozentsätze der Komponenten (a), (b) und (c), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

$$\text{UMS.} = 100\ X_1 + 100\ X_2 + 99{,}2\ X_3 - 0{,}4\ X_1X_3 - 3{,}6\ X_2X_3 + 3{,}0\ X_1X_2X_3 \qquad \text{(I)}$$

$$T_g = 112\ X_1 - 44\ X_2 - 88\ X_1X_2 - 44\ X_1X_3 - 20\ X_2X_3 + 87\ X_1X_2X_3 \qquad \text{(II)}$$

$$\text{WA} = 2\ X_1 + 62\ X_2 + 19{,}4\ X_3 + 56{,}8\ X_1X_2 - 6{,}8\ X_1X_3 + 17{,}2\ X_2X_3 + 92{,}7\ X_1X_2X_3 \qquad \text{(III)}$$

$$\text{WS} = 10\ X_1 + 5\ X_3 - 4\ X_1X_2 + 10\ X_1X_3 - 10\ X_2X_3 + 12\ X_1X_2X_3 \qquad \text{(IV)}$$

wobei UMS den Monomerumsatz in Masse-% bedeutet und einen Wert von mindestens 99% hat, wobei ein durch Vermischen von 575 Gew.-Teilen entmineralisiertem Wasser, 5 Gew.-Teilen eines 10%igen Alkarylsulfonats als anionischem Tensid, 120 Gew.-Teilen eines 25%igen nichtionischen Tensids, 4 Gew.-Teilen Kaliumpersulfat, 390 Gew.-Teilen (a), 100 Gew.-Teilen (b), 500 Gew.-Teilen (c) und 10 Gew.-Teilen (d) hergestellter Premix unter Stickstoff über einen Zeitraum von 3 Stunden bei 80°C zu 480 Gew.-Teilen entmineralisiertem Wasser, 95 Gew.-Teilen des 10%igen Alkarylsulfonats als anionischem Tensid in Wasser und 1 Gew.-Teil Kaliumpersulfat gegeben wurde und der Emulsionspremix über einen Zeitraum von 3 Stunden in einen auf 80°C vorgewärmten, mit dem restlichen entmineralisierten Wasser und den Restmengen des anionischen Tensids, des nichtionischen Tensids und des radikalbildenden Initiators befüllten Reaktor eindosiert und noch zwei Stunden bei 80°C nachreagieren gelassen wurde; $T_g$ die Glasübergangstemperatur mit einem Wert im Bereich von 0 bis 50°C; WA den Wasseraufnahmewert von höchstens 35 Masse-%; WS den Wasserfleckwert nach 24 Stunden, der mindestens 6 beträgt; $X_1$ den Gewichtsanteil der Komponente (a); $X_2$ den Gewichtsanteil der Komponente (b) und $X_3$ den Gewichtsanteil der Komponente (c) bedeuten, wobei die jeweiligen Werte von $X_1$, $X_2$ und $X_3$ im Bereich von 0,5 bis 99,0 Gew.-%, bezogen auf das Gesamtgewicht der Komponenten (a), (b) und (c) liegen.

**2.** Mischpolymerisate nach Anspruch 1, dadurch gekennzeichnet, daß die Komponente (d) aus Acrylsäure und Acrylamid ausgewählt ist.

**3.** Mischpolymerisate nach Anspruch 1, dadurch gekennzeichnet, daß die Gewichtsanteile der Komponenten (a), (b) und (c) gleichzeitig die Gleichungen (I) bis (IV) erfüllen, wobei UMS einen Wert von mindestens 99,2%; $T_g$ einen Wert im Bereich von 10 bis 50°C; WA einen Wert von höchstens 25% und WS (24 Stunden) einen Wert von mindestens 7 hat.

**4.** Mischpolymerisate nach den Ansprüchen 1 bis 3, dadurch gekennzeichnet, daß sie sich aus einer Ausgangsmischung aus:

(a) 15 bis 65 Gew.-% Methacrylsäuremethylester;
(b) 0,5 bis 20 Gew.-% Acrylsäurebutylester;
(c) 20 bis 85% Gew.-% Vinylestern einer tertiären Carbonsäure mit 10 Kohlenstoffatomen;
(d) 0,5 bis 3 Gew.-% Acrylsäure oder Acrylamid ableiten lassen.

**5.** Latex, das als polymeren Bestandteil 30-60 Gew.-% eines Mischpolymerisats nach einem der Ansprüche 1 bis 4 enthält.

**6.** Latex nach Anspruch 5, dadurch gekennzeichnet, daß der polymere Bestandteil 40-50 Gew.-% ausmacht.

**7.** Beschichtungszusammensetzungen, enthaltend einen Latex nach einem der Ansprüche 5 und 6 und mindestens ein Pigment.

8. Festes, mischpolymerisiertes Produkt, gebildet durch physikalisches Trocknen eines Latex nach den Ansprüchen 5 und 6.

9. Verfahren zur Herstellung von Latices, die die Mischpolymerisate nach einem der Ansprüche 1 bis 4 enthalten, durch Polymerisation der Comonomermischungen bei einer Temperatur im Bereich von 20 bis 100°C in Gegenwart eines oder mehrerer Polymerisationsinitiatoren und eines anionischen oberflächenaktiven Mittels, das ein Alkylarylsulfonat enthält, zusammen mit einem nichtionischen oberflächenaktiven Mittel, die eine Verbindung $R-C_6H_4-O\{CH_2-CH_2-O\}_n-H$, wobei R eine $C_{6-16}$-Alkylgruppe und n eine Zahl zwischen 3 und 40 darstellen, enthält, in einer Menge von 1 bis 4 Gew.-% als Stabilisierungsmittel.

## Revendications

### Revendications pour les Etats contractants suivants : BE, CH, DE, FR, GB, IT, LI, NL

1. Interpolymères que l'on peut obtenir par la polymérisation d'un mélange de comonomères comprenant

   (a) du méthacrylate de méthyle,
   (b) de l'acrylate de butyle,
   (c) de l'ester vinylique d'un ou plusieurs acides monocarboxyliques saturés dans lesquels les radicaux carboxyle sont attachés à des atomes de carbone tertiaires et/ou quaternaires et dans lesquels le groupement acide contient 10 atomes de carbone,
   (d) un monomère stabilisateur, choisi dans le groupe formé par l'acide acrylique, l'acide méthacrylique, l'acrylamide, le méthacrylamide, le diacétoneacrylamide et le vinylsulfonate de sodium et leurs mélanges, parmi lesquels on préfère l'acide acrylique et l'acrylamide, en une proportion de 0,5 à 5% en poids,

   par rapport au poids total des monomères, où les pourcentages pondéraux respectifs des composants (a), (b) et (c), calculés par rapport au poids total de la somme des quantités de ces composants, satisfont simultanément aux équations suivantes, chacune d'entre elles décrivant des compositions possédant des lignes de contour de comportement égales dans un diagramme ou graphique triangulaire :

$$\text{CONV.} = 100\,X_1 + 100\,X_2 + 99{,}2\,X_3 - 0{,}4\,X_1X_3 - 3{,}6\,X_2X_3 + 3{,}0\,X_1X_2X_3 \quad \text{(I)}$$

$$T_g = 112\,X_1 - 44\,X_2 - 88\,X_1X_2 - 44\,X_1X_3 - 20\,X_2X_3 + 87\,X_1X_2X_3 \quad \text{(II)}$$

$$\text{WA} = 2\,X_1 + 62\,X_2 + 19{,}4\,X_3 + 56{,}8\,X_1X_2 - 6{,}8\,X_1X_3 + 17{,}2\,X_2X_3 + 92{,}7\,X_1X_2X_3 \quad \text{(III)}$$

$$\text{WS} = 10\,X_1 + 5\,X_3 - 4\,X_1X_2 + 10\,X_1X_3 - 10\,X_2X_3 + 12\,X_1X_2X_3 \quad \text{(IV)}$$

   où CON représente la conversion des monomères en % m/m et possède une valeur d'au moins 99, où on a préparé un prémélange ou mélange préalable en mélangeant 575 parties en poids d'eau déminéralisée, 5 parties en poids d'un surfactif anionique du type alcarylsulfonate à 10%, 120 parties en poids d'un surfactif non ionique à 25%, 4 parties en poids de persulfate de potassium, 390 parties en poids de (a), 100 parties en poids de (b), 500 parties en poids de (c) et 10 parties en poids de (d) et le prémélange a été ajouté en l'espace de 3 heures, sous atmosphère d'azote à 80°C, à 480 parties en poids d'eau déminéralisée, 95 parties en poids de surfactif anionique du type alcarylsulfonate à 10% dans de l'eau et 1 partie en poids de persulfate de potassium, opération suivie de l'introduction régulière du prémélange en émulsion en l'espace de 3 heures dans un réacteur qui avait été préchauffé jusqu'à la température de 80°C et qui avait été rempli du reste de l'eau déminéralisée et des quantités résiduelles du surfactif anionique, du surfactif non ionique et de l'amorceur formateur de radicaux libres, addition suivie de la poursuite de la réaction à 80°C pendant 2 heures, où $T_g$ représente la température de transition vitreuse qui possède une valeur variant de 0 à 50°C, où WA représente la valeur d'absorption d'eau d'au plus 35% m/m, où WS représente l'indice de maculage par l'eau après 24 heures, qui est d'au moins 6, où $X_1$ représente le pour-

centage pondéral du composant (a), $X_2$ représente le pourcentage pondéral du composant (b) et où $X_3$ représente le pourcentage pondéral du composant (c), les valeurs de $X_1$, $X_2$ et $X_3$ étant calculées par rapport au poids des composants (a), (b) et (c), chacun d'entre eux se situant dans la plage de 0,5 à 99,0%, en poids, avec la condition que lorsque le mélange des conomomères comprenant un mélange d'un ester vinylique d'un acide carboxylique tertiaire dans lequel le groupement acide contient 9 atomes de carbone et d'un ester vinylique d'un acide carboxylique aliphatique tertiaire dans lequel le groupement acide contient 10 atomes de carbone, la quantité de l'ester vinylique d'un acide carboxylique aliphatique tertiaire dans lequel le groupement acide contient 10 atomes de carbone soit supérieur à 30% en poids sur base de la quantité totale des esters vinyliques d'un acide carboxylique tertiaire.

**2.** Interpolymères suivant la revendication 1, caractérisés en ce que l'on choisit le composant (d) parmi l'acide acrylique et l'acrylamide.

**3.** Interpolymères suivant la revendication 1, caractérisés en ce que les fractions pondérales des composants (a), (b) et (c) remplissent simultanément les conditions imposées par les équations (I) à (IV), où CONV a une valeur d'au moins 99,2%, où $T_g$ a une valeur qui varie de 10 à 50°C, où WA a une valeur d'au maximum 25% et où WS (24 heures) a une cote d'au moins 7.

**4.** Interpolymères suivant l'une quelconque des revendications 1 à 3, caractérisés en ce qu'on peut les obtenir à partir d'un mélange de départ comprenant :

(a) de 15 à 65% en poids de méthacrylate de méthyle,
(b) de 0,5 à 20% en poids d'acrylate de butyle,
(c) de 20 à 85% en poids de esters vinylique d'un acide carboxylique tertiaire contenant 10 atomes de carbone.
(d) de 0,5 à 3% en poids d'acide acrylique ou d'acrylamide.

**5.** Latex contenant, à titre de constituant polymérique, 30 à 60% en poids d'un interpolymère suivant l'une quelconque des revendications 1 à 4.

**6.** Latex suivant la revendication 5, caractérisé en ce que la proportion du constituant polymérique s'élève de 40 à 50% en poids.

**7.** Compositions de revêtement comprenant un latex suivant l'une quelconque des revendications 5 et 6 et au moins un pigment.

**8.** Produit interpolymérique formé par le séchage physique d'un latex suivant l'une quelconque des revendications 5 et 6.

**9.** Procédé de préparation de latex contenant les interpolymères suivant l'une quelconque des revendications 1 à 4, par la copolymérisation des mélanges des comonomères à une température qui varie de 20 à 100°C en présence d'un ou plusieurs amorceurs de polymérisation et, à titre de stabilisateur, d'un agent tensioactif anionique comprenant un alkylarylsulfonate en même temps que d'un agent tensioactif non ionique comprenant un composé de la formule

$$R-C_6H_4-O-(CH_2-CH_2-O)_n-H,$$

dans laquelle R représente un groupe alkyle en $C_6$ à $C_{16}$ et n représente un nombre dont la valeur varie de 3 à 40, en une proportion de 1 à 4% en poids.

**Revendications pour l'Etat contractant suivant : DK**

**1.** Interpolymères que l'on peut obtenir par la polymérisation d'un mélange de comonomères comprenant

(a) du méthacrylate de méthyle,
(b) de l'acrylate de butyle,
(c) de l'ester vinylique d'un ou plusieurs acides monocarboxyliques saturés dans lesquels les radicaux carboxyle sont attachés à des atomes de carbone tertiaires et/ou quaternaires et dans lesquels le groupement acide contient 10 atomes de carbone,

(d) un monomère stabilisateur, choisi dans le groupe formé par l'acide acrylique, l'acide méthacrylique, l'acrylamide, le méthacrylamide, le diacétoneacrylamide et le vinylsulfonate de sodium et leurs mélanges, parmi lesquels on préfère l'acide acrylique et l'acrylamide, en une proportion de 0,5 à 5% en poids,

par rapport au poids total des monomères, où les pourcentages pondéraux respectifs des composants (a), (b) et (c), calculés par rapport au poids total de la somme des quantités de ces composants, satisfont simultanément aux équations suivantes, chacune d'entre elles décrivant des compositions possédant des lignes de contour de comportement égales dans un diagramme ou graphique triangulaire :

$$\text{CONV.} = 100\ X_1 + 100\ X_2 + 99{,}2\ X_3 - 0{,}4\ X_1X_3 - 3{,}6\ X_2X_3 + 3{,}0\ X_1X_2X_3 \quad \text{(I)}$$

$$T_g = 112\ X_1 - 44\ X_2 - 88\ X_1X_2 - 44\ X_1X_3 - 20\ X_2X_3 + 87\ X_1X_2X_3 \quad \text{(II)}$$

$$\text{WA} = 2\ X_1 + 62\ X_2 + 19{,}4\ X_3 + 56{,}8\ X_1X_2 - 6{,}8\ X_1X_3 + 17{,}2\ X_2X_3 + 92{,}7\ X_1X_2X_3 \quad \text{(III)}$$

$$\text{WS} = 10\ X_1 + 5\ X_3 - 4\ X_1X_2 + 10\ X_1X_3 - 10\ X_2X_3 + 12\ X_1X_2X_3 \quad \text{(IV)}$$

où CON représente la conversion des monomères en % m/m et possède une valeur d'au moins 99, où on a préparé un prémélange ou mélange préalable en mélangeant 575 parties en poids d'eau déminéralisée, 5 parties en poids d'un surfactif anionique du type alcarylsulfonate à 10%, 120 parties en poids d'un surfactif non ionique à 25%, 4 parties en poids de persulfate de potassium, 390 parties en poids de (a), 100 parties en poids de (b), 500 parties en poids de (c) et 10 parties en poids de (d) et le prémélange a été ajouté en l'espace de 3 heures, sous atmosphère d'azote à 80°C, à 480 parties en poids d'eau déminéralisée, 95 parties en poids de surfactif anionique du type alcarylsulfonate à 10% dans de l'eau et 1 partie en poids de persulfate de potassium, opération suivie de l'introduction régulière du prémélange en émulsion en l'espace de 3 heures dans un réacteur qui avait été préchauffé jusqu'à la température de 80°C et qui avait été rempli du reste de l'eau déminéralisée et des quantités résiduelles du surfactif anionique, du surfactif non ionique et de l'amorceur formateur de radicaux libres, addition suivie de la poursuite de la réaction à 80°C pendant 2 heures, où $T_g$ représente la température de transition vitreuse qui possède une valeur variant de 0 à 50°C, où WA représente la valeur d'absorption d'eau d'au plus 35% m/m, où WS représente l'indice de maculage par l'eau après 24 heures, qui est d'au moins 6, où $X_1$ représente le pourcentage pondéral du composant (a), $X_2$ représente le pourcentage pondéral du composant (b) et où $X_3$ représente le pourcentage pondéral du composant (c), les valeurs de $X_1$, $X_2$ et $X_3$ étant calculées par rapport au poids des composants (a), (b) et (c), chacun d'entre eux se situant dans la plage de 0,5 à 99,0%.

**2.** Interpolymères suivant la revendication 1, caractérisés en ce que l'on choisit le composant (d) parmi l'acide acrylique et l'acrylamide.

**3.** Interpolymères suivant la revendication 1, caractérisés en ce que les fractions pondérales des composants (a), (b) et (c) remplissent simultanément les conditions imposées par les équations (I) à (IV), où CONV a une valeur d'au moins 99,2%, où $T_g$ a une valeur qui varie de 10 à 50°C, où WA a une valeur d'au maximum 25% et où WS (24 heures) a une cote d'au moins 7.

**4.** Interpolymères suivant l'une quelconque des revendications 1 à 3, caractérisés en ce qu'on peut les obtenir à partir d'un mélange de départ comprenant :

(a) de 15 à 65% en poids de méthacrylate de méthyle,

(b) de 0,5 à 20% en poids d'acrylate de butyle,

(c) de 20 à 85% en poids de esters vinylique d'un acide carboxylique tertiaire contenant 10 atomes de carbon carbone.

(d) de 0,5 à 3% en poids d'acide acrylique ou d'acrylamide.

5. Latex contenant, à titre de constituant polymérique, 30 à 60% en poids d'un interpolymère suivant l'une quelconque des revendications 1 à 4.

6. Latex suivant la revendication 5, caractérisé en ce que la proportion du constituant polymérique s'élève de 40 à 50% en poids.

7. Compositions de revêtement comprenant un latex suivant l'une quelconque des revendications 5 et 6 et au moins un pigment.

8. Produit interpolymérique formé par le séchage physique d'un latex suivant l'une quelconque des revendications 5 et 6.

9. Procédé de préparation de latex contenant les interpolymères suivant l'une quelconque des revendications 1 à 4, par la copolymérisation des mélanges des comonomères à une température qui varie de 20 à 100°C en présence d'un ou plusieurs amorceurs de polymérisation et, à titre de stabilisateur, d'un agent tensioactif anionique comprenant un alkylarylsulfonate en même temps que d'un agent tensioactif non ionique comprenant un composé de la formule

$$R-C_6H_4-O-(CH_2-CH_2-O)_n-H,$$

dans laquelle R représente un groupe alkyle en $C_6$ à $C_{16}$ et n représente un nombre dont la valeur varie de 3 à 40, en une proportion de 1 à 4% en poids.

FIG. 1

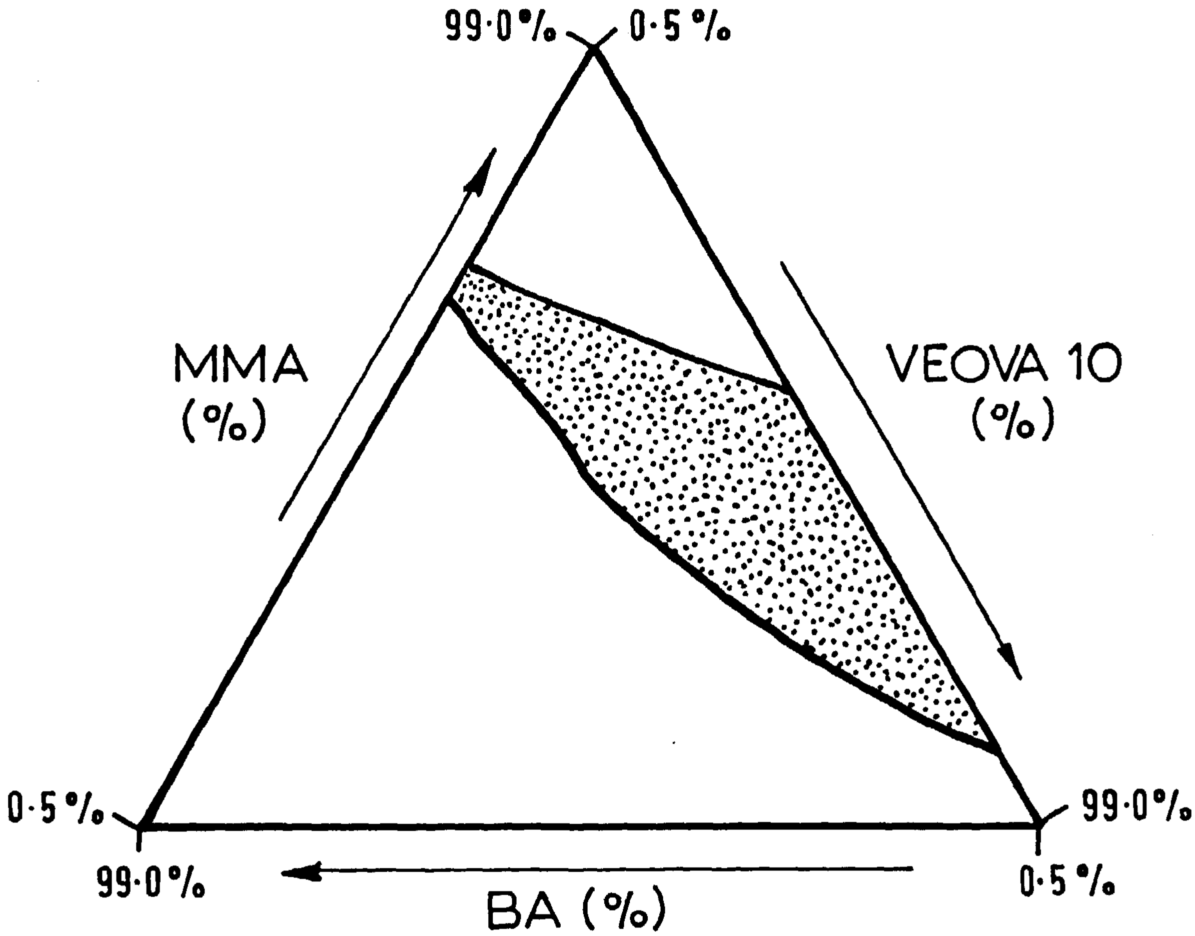


MMA = Methyl Methacrylate
BA = Butyl Acrylate

FIG. 2

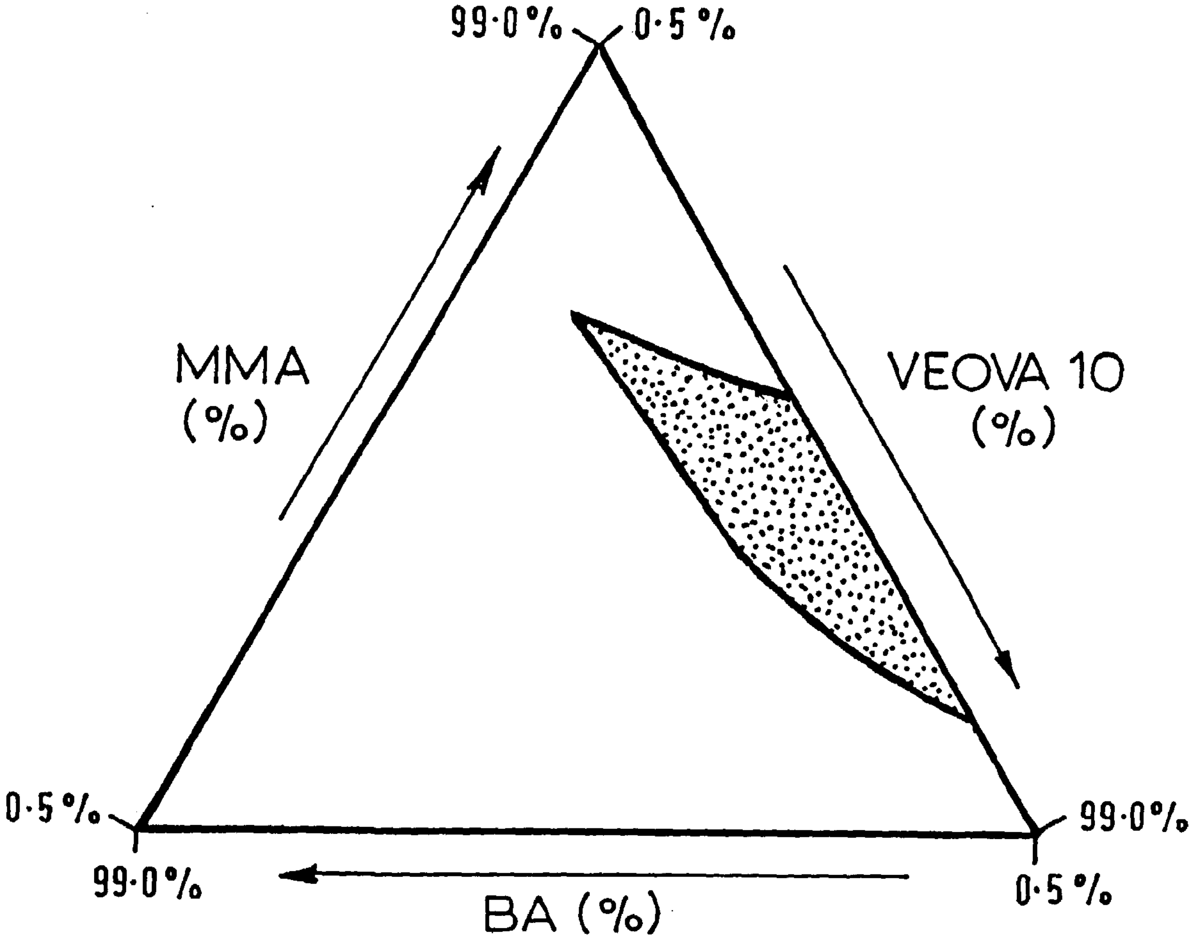


MMA = Methyl Methacrylate
BA = Butyl Acrylate